# FASCICULE DE BREVET EUROPEEN

(11) **EP 0 545 841 B1**
(45) Date de publication et mention de la délivrance du brevet: **07.02.1996**
(21) Numéro de dépôt: 92480178.0
(22) Date de dépôt: 20.11.1992
(51) Int. Cl.: H02G 1/12

(54) **Procédé de préparation de coupe et de pré-dénudage pour câble ou fil conducteur et appareil pour sa mise en oeuvre**
Herstellungsverfahren zum Schneiden und Vorentmanteln von Kabeln und Drahtleitern und Apparat zur Durchführung des Verfahrens
Process for the preparation of cutting and prestripping cables or conductor wires and apparatus for the implementation of the process

(30) Priorité: 29.11.1991 FR 9115113
(43) Date de publication de la demande: 09.06.1993
(73) Titulaire: Andreis, Gilbert, F-06000 Nice (FR); Dauchy, Michel, F-06000 Nice (FR)
(72) Inventeur: Andreis, Gilbert, F-06000 Nice (FR); Dauchy, Michel, F-06000 Nice (FR)
(74) Mandataire: Hautier, Jean-Louis

(56) Documents cités:
- EP-A- 0 394 014
- US-A- 2 686 362
- US-A- 2 731 750

## Description

L'invention a pour objet un procédé de préparation de coupe et de pré-dénudage pour câble conducteur ou fil conducteur et appareil pour sa mise en oeuvre.

L'invention s'applique notamment auxdits fils conducteurs mono ou multibrins, fibres optiques, aux câbles dits câbles en nappe à deux, trois, quatre ou plus de conducteurs. Les âmes des câbles ou fils conducteurs peuvent être monobrins ou multibrins.

Actuellement, les machines qui préparent les câbles opèrent deux opérations simultanément. Une première opération coupe le câble et son isolant, la seconde opération dénude le câble. En général, les câbles en nappe sont pré-dénudés, c'est-à-dire que la partie isolante qui recouvre les extrémité des âmes ou torons des câbles est coupée et laissée en place pour protéger lesdites extrémités des âmes des câbles. Cette partie isolante est appelée le "déchet". Des morceaux de câbles sortent de la machine, coupés à la longueur choisie, les âmes des extrémités portent une partie déchet. Ces morceaux de câble préparés sont stockés et manipulés. Ces opérations peuvent détériorer ces morceaux de câble, par exemple les morceaux de câbles sont tordus, la partie déchet qui protège les extrémités des âmes peut tomber, les extrémités des âmes des câbles sont très fragiles et ne sont plus en ligne avec les lignes de référence. Ces morceaux de câbles détériorés ne sont plus utilisables pour être branchés par exemple sur des circuits imprimés. Il est trop onéreux de remettre les extrémités des âmes des câbles dans les lignes de référence, il y a donc beaucoup de morceaux de câbles inutilisables.

Ces problèmes sont encore plus fréquents pour la préparation de câbles de petites dimensions,que ces câbles de petites dimensions soient monoconducteur ou multiconducteurs pour les câbles en nappe.

Actuellement, les câbles de ce type de petites dimensions se situent aux alentours de cinquante millimètres.

Le procédé selon l'invention permet de préparer des câbles de dimensions beaucoup plus petites, par exemple de douze millimètres.

Le procédé selon l'invention permet de préparer des câbles (coupe et pré-dénudage) en continu sans séparer les différents morceaux. Il est possible de stocker les câbles préparés en rouleau évitant ainsi tous les inconvénients cités plus haut.

L'état de la technique peut être défini par les brevets suivant :
- FR-A-2,613.882 *:* l'invention se rapporte à un dispositif destiné au dénudage d'un conducteur sous gaine métallique rigide, tel que, par exemple, un conducteur coaxial de ce type. Il comporte deux électrodes aptes à faire fondre une petite portion annulaire de gaine et deux autres électrodes aptes à faire fondre deux génératrices opposées de la portion de gaine à éliminer.
- FR-A-2,634.073 *:* l'invention concerne un appareil pour dénuder de son isolant un tronçon extrême d'un fil électrique isolé, retirer une borne électrique d'un ruban de support et sertir la borne sur le tronçon extrême dénudé du fil. Il comprend un transporteur rotatif destiné à faire avancer le ruban pas à pas pour l'aligner avec un dispositif fixe de prise de fil, un mécanisme de pré-avance destiné à détacher partiellement une borne du ruban , un dispositif de coupe de l'isolant et de dénudage et deux têtes de prise et de sertissage de la borne. Le dispositif est rétracté pour dénuder un tronçon extrême du fil isolé lorsque l'extrémité de ce fil coupe un faisceau laser.

FR-A-2.622.366 : la présente invention concerne les dispositifs permettant de dénuder des câbles comportant une âme centrale entourée d'une gaine. Le dispositif selon l'invention se caractérise par le fait qu'il comporte un corps comprenant un logement en creux avec une ouverture à une extrémité, par laquelle peut être introduit le câble, une butée située dans le logement, des moyens pour déplacer la butée entre deux positions dont l'une est sur l'axe, des moyens pour translater la butée suivant une direction sensiblement parallèle à l'axe du logement, des moyens pour pincer le câble et des moyens pour entailler circulairement la gaine sur une profondeur égale à son épaisseur, ces moyens pour entailler étant situés dans le logement entre les moyens de pincement et la butée.

FR-A-2.528.635 : l'invention concerne un outil à dénuder. L'outil de l'invention comprend deux mâchoires pouvant se déplacer l'une sur l'autre et dont au moins une comporte un tranchant près de son extrémité et sur le côté tourné vers la mâchoire opposée, tranchant dont la hauteur correspond à l'épaisseur d'une gaine d'isolation habituelle et qui, dans son sens longitudinal s'étend perpendiculairement à l'axe longitudinal des mâchoires, lesquelles peuvent pivoter sur leur axe de symétrie.

FR-A-2.607.636 : la présente invention concerne un outil pour apprêter un câble électrique du type comportant un corps dans lequel est ménagé un passage de tourillonnement destiné à recevoir le bout du câble à dénuder, ce corps comportant au moins un couteau qui fait saillie sur une distance réglable à l'intérieur du passage et qui présente deux tranchants, l'un sensiblement radial et l'autre à l'extrémité interne du premier tranchant qui est parallèle à l'axe du passage, le corps délimitant ce passage par deux blocs adjacents mobiles l'un par rapport à l'autre. Conformément à l'invention, la surface de l'un des blocs du corps réalisant la ou les génératrices de guidage du tourillonnement du câble s'engage entre les surfaces en V constituant, sur l'autre bloc du corps, les génératrices opposées de guidage du tourillonnement du câble.
- EP,197,588 : Un procédé pour le traitement de l'extrémité d'un câble rond multiconducteur blindé comportant une gaine extérieure et la connexion de ladite extrémité de câble à un connecteur, comportant les étapes qui consistent :
   a) à sectionner la gaine extérieure jusqu'au blindage métallique le long et complètement autour de deux lignes circonférentielles écartées l'une de l'autre de manière à former entre elles un tube de gaine auxiliaire et de former aussi un tube de gaine d'extrémité vers l'extrémité du câble ;
   b) à faire glisser le tube de gaine d'extrémité de côté sur une certaine distance, puis à la faire glisser en arrière sur le câble avec le blindage, de telle sorte que ledit blindage situé initialement au-dessous du tube de gaine d'extrémité foisonné, et subséquemment à sectionner le blindage foisonné et à enlever le tube de gaine d'extrémité et le blindage sectionné ;
   c) à faire glisser le tube de gaine auxiliaire de côté au-dessus du bord du blindage sectionné puis à le faire glisser en arrière sur le câble en même temps que le blindage situé initialement au-dessous du tube de gaine auxiliaire de sorte que ledit blindage foisonne, puis à replier subséquemment le blindage foisonné tout autour et au-dessus du tube de gaine auxiliaire
   et d) : à dénuder ou enlever l'isolement des conducteurs séparés en connectant les conducteurs à un bloc de contact du connecteur et à relier une borne de terre du connecteur au blindage replié.
- EP.140.038
- EP-140.397 : Appareil à dénuder pour câbles coaxiaux comprenant : une partie poignée de forme allongée dans laquelle est ménagée une ouverture traversante destinée à recevoir le câble à travailler et un dispositif de blocage servant à maintenir le câble bloqué en rotation. Un organe formant voie de guidage de forme allongée, qui, à sa première extrémité est raccordé à la partie poignée avec possibilité de rotation illimitée, dans la région de ladite ouverture et disposé pour dégager un câble introduit à partir de la partie poignée sur une longueur prédéterminée en vue d'une attaque par des organes lames ; au moins deux organes lames disposés à un certain écartement mutuel dans un porte-lames de forme allongée, de différentes longueurs pour l'exécution d'une entaille courte, d'une profondeur prédéterminée et qui peut être étendue sur toute la circonférence du câble sous l'effet d'une rotation relative entre le câble et le porte-lames, l'organe formant voie de guidage et le porte-lames pouvant être mis en rotation conjointement par rapport à la partie poignée pour l'exécution de la rotation précitée à l'aide d'un organe manivelle ; la première extrémité du porte-lames se trouvant plus près de la partie poignée et le porte lame étant relié, par sa deuxième extrémité, avec possibilité de déplacement sur une course limitée entre deux positions extrêmes, à la deuxième extrémité de l'organe formant voie de guidage et l'organe lame le plus long étant le plus rapproché de la deuxième extrémité du porte-lames de sorte que le porte-lames peut se déplacer par rapport à l'organe formant voie de guidage de telle manière que, dans la phase initiale d'une opération de dénudage, seul l'organe lame, qui est le plus rapproché de la deuxième extrémité de l'organe voie de guidage qui a à exécuter l'entaille la plus profonde entre seul en prise, de sorte que les translations de l'isolant dans la direction longitudinale du câble qui sont provoquées par cette entaille peuvent se produire sans obstacle.
- EP-A-0.394.014 : l'invention concerne la réalisation des terminaisons de câbles dans la fabrication de faisceaux de conducteurs électriques, obtenue en coupant un câble plat blindé en deux parties, en faisant des découpes dans la gaine de chacune des parties, en tirant les deux parties de câble dans des directions opposées de façon à séparer les parties de gaine à partir des découpes respectives avec les parties terminales découvertes des parties de câble faisant encore saillie dans les parties de gaine, et en coupant les parties terminales découvertes aux extrémités des parties de gaine respectives de façon à aligner leurs extrémités en laissant les chutes d'extrémité découpées des parties terminales maintenues à l'intérieur des parties de gaine découpées.
- US-A-2.731.750 : l'invention décrit une machine automatique pour marquer des articles linéaires à des points précis suivant leur axe longitudinal, ladite machine comprenant des moyens pour faire avancer l'article linéaire ou pour le faire stopper auxdits endroits précis. Par ailleurs, cette machine est pourvue d'un système pour entailler les articles linéaires.

Le procédé de préparation de coupe en morceaux et de pré-découpage pour fils ou câbles conducteurs, du type utilisant des moyens de coupe et des moyens de pré-dénudage est caractérisé par le fait qu'il utilise un moyen de coupe qui coupe aux longueurs désirées les morceaux de câble ; le moyen de coupe ne coupe que l'âme ou toron métallique du fil ou câble et le minimum d'isolant enrobant l'âme du câble et ce, de manière à garder une continuité au niveau de l'isolant ; les moyens de pré-dénudage de l'extrémité ou des extrémités des âmes ou torons métalliques du morceau de câble découpé sont disposés et utilisés en aval et/ou en amont dudit moyen de coupe et sont constitués par deux lames tranchantes disposées de part et d'autre, en aval et/ou en amont du moyen de coupe des âmes, les lames sont perpendiculaires à l'axe longitudinal du câble, des empreintes tranchantes demi-cylindriques correspondent aux âmes ou torons des conducteurs.

Le moyen de coupe est un couteau dont les dents pointues à double tranchant ont une lame perpendiculaire à l'axe longitudinal du câble.

Le moyen de coupe est un appareil de coupe du type laser.

La largeur des lames des dents est légèrement supérieure au diamètre de l'âme ou toron métallique des câbles ou fils conducteurs.

Les deux lames tranchantes sont à une seule pente et ladite pente est orientée vers le bas, vers le moyen de coupe qui est disposé entre les deux lames.

Dans le cas de câbles en nappe, le moyen de coupe ne coupe que l'âme ou toron métallique du câble et le minimum d'isolant enrobant ladite âme et ce, de manière à garder solidaire le reste des parties formant l'isolant et notamment la partie isolante qui relie les différents conducteurs entre eux et qui forme ladite nappe.

L'entraxe, entre les moyens de coupe ou lames du moyen de coupe, correspond à l'entraxe entre les âmes ou torons des conducteurs du câble en nappe.

Les moyens de pré-dénudage sont deux lames tranchantes disposées perpendiculaires à l'axe longitudinal du câble et dont l'écartement détermine la longueur du déchet, lesdites lames comportent des empreintes tranchantes demi-cylindriques qui correspondent aux âmes ou torons des conducteurs, la partie restante de la lame tranchante est horizontale pour couper l'isolant qui forme la nappe et qui lie les différents conducteurs du câble entre eux.

Ledit appareil comporte un moyen de coupe qui coupe aux longueurs désirées les morceaux de câble ; le moyen de coupe ne coupe que l'âme ou toron métallique du fil ou câble et le minimum d'isolant enrobant l'âme du câble et ce, de manière à garder une continuité au niveau de l'isolant ; les moyens de pré-dénudage de l'extrémité ou des extrémités des âmes ou torons métalliques du morceau de câble découpé sont disposés et utilisés en aval et/ou en amont dudit moyen de coupe.

Les deux lames tranchantes sont à une seule pente et ladite pente est orientée vers le bas, vers le moyen de coupe qui est disposé entre les deux lames.

Selon un autre mode de réalisation, le moyen de coupe est un appareil de coupe du type laser.

Dans le cas de câbles en nappe, le moyen de coupe ne coupe que l'âme ou toron métallique du câble et le minimum d'isolant enrobant ladite âme et ce, de manière à garder solidaire le reste des parties formant l'isolant et notamment la partie isolante qui relie les différents conducteurs entre eux et qui forme ladite nappe.

L'entraxe, entre les moyens de coupe ou lames du moyen de coupe, correspond à l'entraxe entre les âmes ou torons des conducteurs du câble en nappe.

Dans le cas de câbles en nappe, les moyens de pré-dénudage sont deux lames tranchantes disposées perpendiculaire à l'axe longitudinal du câble et dont l'écartement détermine la longueur du déchet, lesdites lames comportent des empreintes tranchantes demi-cylindriques qui correspondent aux âmes ou torons des conducteurs, la partie restante de la lame tranchante est horizontale pour couper l'isolant qui forme la nappe et qui lie les différents conducteurs du câble entre eux.

Les dessins ci-joints sont donnés à titre d'exemples indicatifs et non limitatifs. Ils représentent un mode de réalisation préféré selon l'invention. Ils permettront de comprendre aisément l'invention.

La figure 1 est une vue en perspective d'un câble en nappe multiconducteurs, elle met en évidence l'extrémité de l'âme ou toron métallique qui est dénudée des gaines isolantes des conducteurs du câbles.

La figure 2 est une vue en perspective du même morceau de câble en nappe après avoir été traitée selon le procédé selon l'invention. Elle met en évidence les deux parties qui ont été pré-dénudées aux deux extrémités du morceau de câble, la partie appelée déchet dont seule l'âme ou toron métallique a été coupée avec le minimum de matière isolante.

La figure 3 est une vue en perspective de la figure 2 mais où les différentes parties ont été séparées les unes des autres pour mettre en évidence les différentes fonctions utilisées durant le procédé de préparation.

La figure 4 est une vue en perspective de deux câbles en nappe multiconducteurs et d'un câble ou fil monoconducteur préparés selon le procédé et qui sont présentés non en vrac, mais sur des rouleaux ce qui facilite la manutention, l'utilisation et l'automatisation de ces câbles ou fils ainsi préparés.

La figure 5 est une vue en perspective d'un morceau de câble coupé et dénudé prêt à être posé.

La figure 6 est une vue schématique, vue de côté, du moyen de coupe de l'âme ou toron métallique du câble et des moyens de pré-dénudage disposés de part et d'autre (en aval et en amont) dudit moyen de coupe.

La figure 7 est une vue en coupe mettant en évidence l'action du moyen de coupe dont la lame est à double tranchant.

La figure 8 est une vue en coupe du câble après l'action du moyen de coupe sur l'âme métallique.

La figure 9 est une vue en perspective des moyens de pré-dénudage et du moyen de coupe. Elle met en évidence la disposition et la forme spécifique des lames et des couteaux, dans un exemple de réalisation.

Le dispositif selon l'invention permet de préparer des câbles, (coupe et pré-dénudage) sans séparer les différents morceaux.

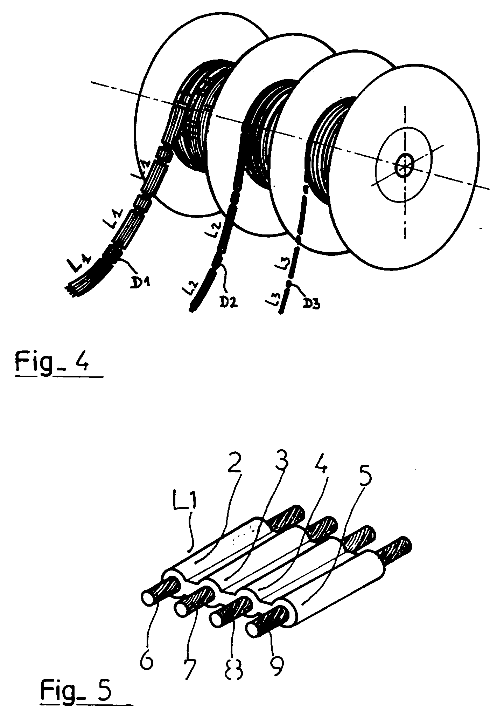

Il est donc possible, comme représenté à la figure 4, de présenter les câbles préparés en rouleaux, il est donc beaucoup plus facile de les manipuler et de les stocker, leur sens et leur orientation étant toujours les mêmes ; cette orientation a son importance, car dans le cas de câble conducteur en nappe, un liseré de couleur indique quelle est la borne référencée numéro un. Il est même possible d'automatiser la pose de ces câbles. Enfin, du fait de cette présentation des câbles préparés selon le procédé, il n'y a plus de pertes de morceaux du fait que les extrémités des âmes métalliques desdits câbles sont toujours protégées par le déchet jusqu'au moment de leur branchement.

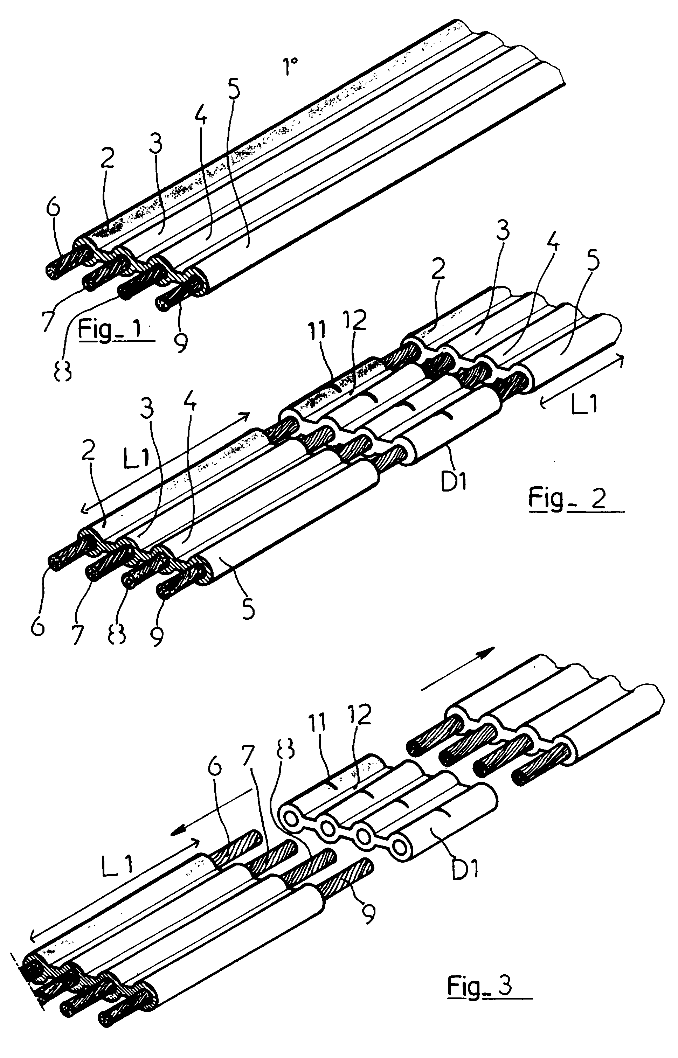

Dans la figure 1, il est représenté en perspective, un câble 1 en nappe, ledit câble est un câble multiconducteur 2, 3,4,5, les extrémités des âmes ou toron métalliques 6,7,8 et 9 sont dénudées.

Le procédé de préparation selon l'invention est du type utilisant des moyens de coupe et des moyens de pré-dénudage.

Ce procédé selon l'invention est caractérisé par le fait qu'il utilise un moyen de coupe 10 qui coupe les morceaux de câble. Les morceaux de câble sont coupés aux longueurs désirées L1 en fonction de l'action du moyen de coupe 10 et de l'avancement du câble sous le moyen de coupe.

Le moyen de coupe 10 ne coupe que les âmes ou torons métalliques 6,7,8,9 des extrémités du câble. Le moyen de coupe 10 ne coupe que le minimum d'isolant enrobant l'âme ou toron du conducteur.

Comme le montre la figure 2, le moyen de coupe 10 laisse uniquement une fente 11 qui est la trace de la coupe effectuée par le moyen de coupe 10 au niveau des âmes ou torons métalliques du câble.

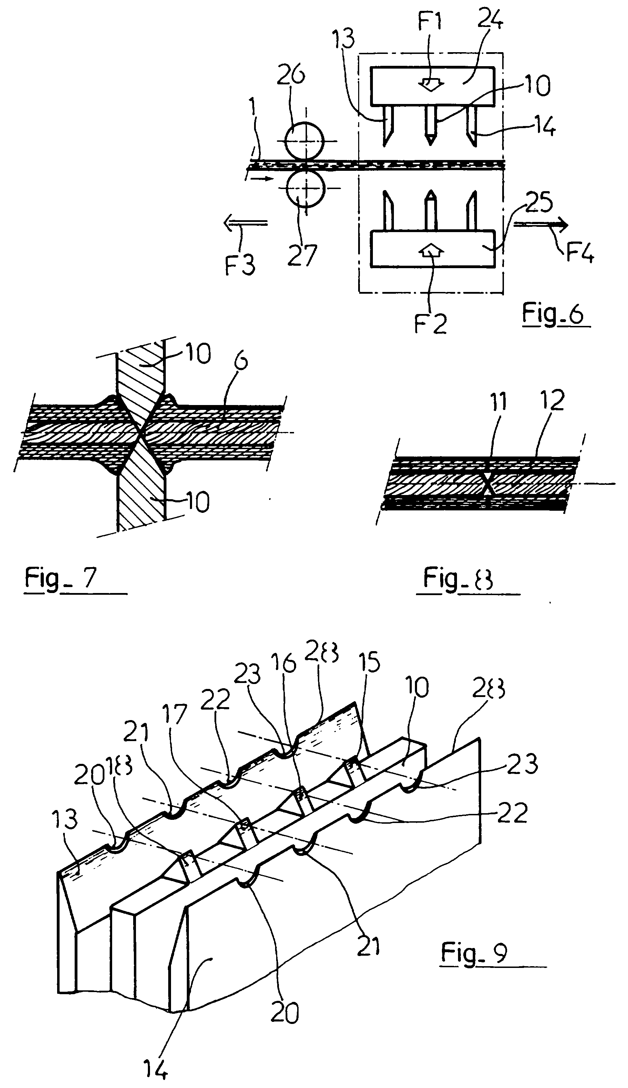

Les figures 7 et 8 mettent en évidence l'action du moyen de coupe 10 au niveau du câble et par rapport à l'âme métallique 6 et à l'isolant 12.

Au niveau du moyen de coupe 10, l'isolant 12 n'est pas complètement coupé et ce de manière à garder solidaire le reste des parties formant l'isolant 12 et notamment cette partie isolante 12 qui forme la nappe et qui relie les différents conducteurs 2,3,4,5 entre eux.

Ce procédé de couper les âmes ou torons métalliques des conducteurs du câble et uniquement une partie de la partie isolante 12, permet de préparer, en continu, le câble sans qu'il se détache en morceaux. Cette continuité conservée dans l'isolant 12 permet de stocker le câble préparé, coupé en morceaux et pré-dénudé, sur des rouleaux.

Les moyens de pré-dénudage 13 et 14 sont disposés et utilisés de part et d'autre (en aval et en amont) du moyen de coupe 10.

Selon le mode de réalisation représenté à titre d'exemple, dans les figures 6,7,8,9, le moyen de coupe 10 est un couteau dont les dents 15,16,17 et 18 sont pointues et à double tranchant. La lame de ce moyen de coupe est perpendiculaire à l'axe longitudinal du câble.

La largeur des lames ou dents 15,16,17,18 est légèrement supérieure au diamètre de l'âme métallique 6,7,8,9 des conducteurs du câble. L'entraxe entre les lames ou entre les dents 15,16,17,18 correspond à l'entraxe entre les âmes ou torons 6,7,8,9 des conducteurs 2,3,4,5 du câble en nappe.

Les moyens de pré-dénudage 13,14 sont deux lames tranchantes disposées de part et d'autre du moyen de coupe 10, les lames 13,14 sont perpendiculaires à l'axe longitudinal des conducteurs du câble. Des empreintes tranchantes 20,21,22 et 23 demi-cylindriques correspondent aux âmes ou torons métalliques 2,3,4,5 du câble, la partie restante 28 de la lame 13 ou 14 coupe l'isolant 12 qui forme la nappe et lie les conducteurs 2,3,4,5 entre eux.

Dans le mode de réalisation représenté dans les figures 6,7 et 8, les moyens de coupe 10 et les moyens de pré-dénudage 13 et 14 sont montés sur une platine supérieure 24 et sur une platine inférieure 25. Lesdites platines se faisant face de part et d'autre du câble en nappe 1 qui est entraîné, en avancement par des rouleaux 26,27. Lesdites platines 24 et 25 peuvent monter ou descendre tel qu'indiqué par les flèches F1 ou F2 ; en contact avec le câble, elle coupe celui-ci à intervalles réguliers, le déplacement du câble par les rouleaux 26,27 détermine la longueur L1 du morceau de câble choisie par l'utilisateur.

Si le moyen de coupe 10 qui coupe le câble et si l'avancement du câble sous le moyen de coupe détermine la longueur L1 du morceau de câble, la distance entre les lames 13,14 définit la longueur du déchet D1,D2,D3. Cette distance D1,D2 ou D3 est réglable de part et d'autre de la lame de coupe 10.

Bien entendu, les moyens de coupe 10 et de pré-dénudage 13 et 14 sont choisis de manière spécifique pour chaque câble, c'est-à-dire en fonction du diamètre des âmes ou torons métalliques des câbles, du nombre de conducteurs des câbles et de la nature du conducteur monobrins ou multibrins.

Dans la figure 4, est représenté un support avec différents rouleaux sur lesquels sont enroulés des câbles qui ont été prédécoupés, préparés et pré-dénudés à des longueurs différentes L1,L2,L3. Ces différents morceaux de câbles sont présentés en continu et enroulés. Les morceaux de fils L3 sont des fils conducteurs monoconducteurs.

La figure 5 représente un morceau de câble avec ses extrémités dénudées et coupées à la longueur L1. Il est bien entendu, que lorsqu'on utilise des morceaux de câbles à partir des rouleaux, on récupère chaque fois des morceaux de câbles coupés aux longueurs désirés L1,L2 ou L3 et qu'il y a lieu de retirer les déchets D1,D2,D3 qui sont jetés et qui correspondent aux morceaux de câbles dénudés. Au milieu du morceau de déchet D1,D2,D3, on trouve les fentes 11 qui correspondent au passage des moyens de coupe qui ont coupé les âmes ou torons métalliques des conducteurs mais qui n'ont pas coupé l'isolant 12 qui forme la nappe et qui relie les conducteurs 2,3,4,5 entre-eux.

Dans la figure 6, lorsque les platines 24 et 25 sont descendues pour actionner les moyens de coupe 10 et les moyens de pré-dénudage 13,14, un dispositif non représenté, agit selon les flèches F3 et F4 pour tirer légèrement sur le câble en pré-dénudant les âmes ou torons métalliques 6,7,8,9 des morceaux de câble découpés en les découvrant de leur gaine isolante 12, et ce, sans rompre la continuité du câble préparé qui est ensuite récupéré par enroulage pour être stocké.

Bien que non représentées sur les figures, les opérations de coupe selon l'invention et de pré-dénudage sont indépendantes. Ces opérations peuvent se faire avant ou après l'opération de coupe.

### REFERENCES

1. câble
2.3.4.5. Conducteurs
6.7.8.9. âmes ou torons métalliques
10. moyen de coupe
11. fente
12. isolant
13. 14. moyens de pré-dénudage
15.16.17.18. dents
20,21,22,23. empreintes tranchantes demi-cylindriques des lames de pré-dénudage
24. platine supérieure
25. platine inférieure
26.27.rouleaux
28. partie horizontale tranchante des lames de pré-dénudage
L1.L2.L3 longueur
D1,D2,D3 déchets
F1, F2 flèches mettant en évidence l'action des moyens de coupe et de pré-dénudage
F3, F4. flèches mettant en évidence la traction sur le câble 1 pour dégager l'isolant au pré-dénudage.

## Revendications

1. Procédé de préparation de coupe en morceaux et de pré-découpage pour fils ou câbles conducteurs, du type utilisant des moyens de coupe et des moyens de pré-dénudage caractérisé par le fait
qu'il utilise un moyen de coupe (10) qui coupe aux longueurs désirées (L1) les morceaux de câble ; le moyen de coupe (10) ne coupe que l'âme ou toron métallique (6,7,8,9) du fil ou câble (1) et le minimum d'isolant (12) enrobant l'âme du câble et ce, de manière à garder une continuité au niveau de l'isolant ; les moyens de pré-dénudage (13,14) de l'extrémité ou des extrémités des âmes ou torons métalliques (6,7,8,9) du morceau de câble découpé sont disposés et utilisés en aval et/ou en amont dudit moyen de coupe (10) et sont constitués par deux lames tranchantes disposées de part et d'autre, en aval et/ou en amont du moyen de coupe (10) des âmes, les lames (13,14) sont perpendiculaires à l'axe longitudinal du câble (1), des empreintes tranchantes (20,21,22,23) demi-cylindriques correspondent aux âmes ou torons (6,7,8,9) des conducteurs (2,3,4,5).

2. Procédé selon la revendication 1 caractérisé par le fait
que le moyen de coupe (10) est un couteau dont les dents pointues (15,16,17,18) à double tranchant ont une lame perpendiculaire à l'axe longitudinal du câble.

3. Procédé selon la revendication 1 caractérisé par le fait
que le moyen de coupe (10) est un appareil de coupe du type laser.

4. Procédé selon la revendication 2 caractérisé par le fait
que la largeur des lames des dents (15,16,17,18) est légèrement supérieur au diamètre de l'âme ou toron métallique (6,7,8,9) des câbles ou fils conducteurs.

5. Procédé selon la revendication 1 caractérisé par le fait
que les deux lames tranchantes sont à une seule pente et que ladite pente est orientée vers le bas, vers le moyen de coupe (10) qui est disposé entre les deux lames.

6. Procédé selon la revendication 1 caractérisé par le fait
que dans le cas de câbles en nappe, le moyen de coupe (10) ne coupe que l'âme ou toron métallique (6,7,8,9) du câble (1) et le minimum d'isolant (12) enrobant ladite âme et ce, de manière à garder solidaire le reste des parties formant l'isolant et notamment la partie isolante qui relie les différents conducteurs (2,3,4,5) entre eux et qui forme ladite nappe.

7. Procédé selon la revendication 6 caractérisé par le fait
que l'entraxe, entre les moyens de coupe (10) ou lames du moyen de coupe, correspond à l'entraxe entre les âmes ou torons (6,7,8,9) des conducteurs (2,3,4,5) du câble (1) en nappe.

8. Procédé selon la revendication 6 caractérisé par le fait
que les moyens de pré-dénudage (13,14) sont deux lames (13,14) tranchantes disposées perpendiculaires à l'axe longitudinal du câble (1) et dont l'écartement détermine la longueur du déchet, lesdites lames (13,14) comportent des empreintes tranchantes (20,21,22,23) demi-cylindriques qui correspondent aux âmes ou torons (6,7,8,9) des conducteurs (2,3,4,5), la partie restante (28) de la lame tranchante est horizontale pour couper l'isolant (12) qui forme la nappe et qui lie les différents conducteurs (2,3,4,5) du câble entre eux.

9. Appareil pour la mise en oeuvre du procédé selon l'une quelconque des revendications 1,2,3,4,5,6,7 ou 8 caractérisé par le fait
qu'il comporte un moyen de coupe (10) qui coupe aux longueurs désirées (L1) les morceaux de câble ; le moyen de coupe (10) ne coupe que l'âme ou toron métallique (6,7,8,9) du fil ou câble (1) et le minimum d'isolant (12) enrobant l'âme du câble et ce, de manière à garder une continuité au niveau de l'isolant ; les moyens de pré-dénudage (13,14) de l'extrémité ou des extrémités des âmes ou torons métalliques (6,7,8,9) du morceau de câble découpé sont disposés et utilisés en aval et/ou en amont dudit moyen de coupe (10).

## Patentansprüche

1. Herstellungsverfahren zum In-Stücke-Schneiden und zum Vorzuschnitt für leitende Drähte oder Kabel, das der Art nach Schneideinrichtungen und Einrichtungen zur Vor-Abisolierung benutzt, dadurch gekennzeichnet,
daß es eine Schneideinrichtung (10) benutzt, die die Kabelstücke auf gewünschte Längen (L1) zuschneidet; die Schneideinrichtung (10) nur die Metallseele oder Metall-Litze (6, 7, 8, 9) des Drahtes oder Kabels (1) sowie das Mindestmaß an Isoliermaterial (12) abschneidet, das die Seele des Kabels umhüllt, und dies derart, daß der stetige Verlauf auf Höhe des Isoliermaterials gewahrt bleibt; und die Vor-Abisoliereinrichtungen (13, 14) für das Ende oder die Enden der Metalldrähte oder Metall-Litzen (6, 7, 8, 9) des abgeschnittenen Kabelstücks nach oder vor der genannten Schneideinrichtung (10) angeordnet und benutzt werden und von zwei Schneideklingen gebildet sind, die beiderseits nach und/oder vor der Schneideinrichtung (10) für die Seelen angeordnet sind, wobei die Klingen (13, 14) senkrecht zur Längsachse des Kabels (1) angeordnet sind und halbzylindrische, schneidende Vertiefungen (20, 21, 22, 23) den Seelen oder Litzen (6, 7, 8, 9) der Leiter (2, 3, 4, 5) entsprechen.

2. Verfahren nach Anspruch 1, dadurch gekennzeichnet, daß die Schneideinrichtung (10) ein Messer ist, dessen angespitzten, zweischneidigen Zähne (15, 16, 17, 18) eine Schneide senkrecht zur Längsachse des Kabels aufweisen.

3. Verfahren nach Anspruch 1, dadurch gekennzeichnet, daß die Schneideinrichtung (10) eine Laser-Schneidevorrichtung ist.

4. Verfahren nach Anspruch 2, dadurch gekennzeichnet, daß die Breite der Schneiden der Zähne (15, 16, 17, 18) ein wenig größer ist als der Durchmesser der Metallseele oder Metall-Litze (6, 7, 8, 9) der leitenden Kabel oder Drähte.

5. Verfahren nach Anspruch 1, dadurch gekennzeichnet, daß die beiden Schneideklingen eine einzige Neigung aufweisen, und daß die genannte Neigung nach unten gegen die Schneideinrichtung (10) hin gerichtet ist, die zwischen den beiden Klingen angeordnet ist.

6. Verfahren nach Anspruch 1, dadurch gekennzeichnet, daß im Fall von Steg- bzw. Flachkabeln die Schneideinrichtung (10) nur die Metallseele oder Metall-Litze (6, 7, 8, 9) des Kabels (1) und das Mindestmaß an Isoliermaterial (12) abschneidet, das die genannte Seele umhüllt, und dies derart, daß der Rest der Abschnitte, die das Isoliermaterial und insbesondere den isolierenden Teil bildet, der die verschiedenen Leiter (2, 3, 4, 5) miteinander verbindet und den genannten Steg bildet, zusammenhängend bleibt.

7. Verfahren nach Anspruch 6, dadurch gekennzeichnet, daß der Mittenabstand zwischen den Schneideinrichtungen (10) oder den Schneiden der Schneideinrichtung dem Mittenabstand zwischen den Seelen oder Litzen (6, 7, 8, 9) der Leiter (2, 3, 4, 5) des Steg- bzw. Flachkabels (1) entspricht.

8. Verfahren nach Anspruch 6, dadurch gekennzeichnet, daß die Vor-Abisoliereinrichtungen (13, 14) zwei Schneideklingen (13, 14) sind, die senkrecht zur Längsachse des Kabels (1) angeordnet sind und deren Abstand die Länge des Abfalls bestimmt, wobei die genannten Klingen (13, 14) halbzylindrische, schneidende Vertiefungen (20, 21, 22, 23) aufweisen, die den Seelen oder Litzen (6, 7, 8, 9) der Leiter (2, 3, 4, 5) entsprechen, wobei der verbleibende Teil (28) der Schneideklinge horizontal ist, um das Isoliermaterial (12) zu schneiden, das den Steg bildet und das die verschiedenen Leiter (2, 3, 4, 5) des Kabels miteinander verbindet.

9. Vorrichtung zur Durchführung des Verfahrens nach irgendeinem der Ansprüche 1, 2, 3, 4, 5, 6, 7 oder 8, dadurch gekennzeichnet,
daß sie eine Schneideinrichtung (10) aufweist, die die Kabelstücke zu gewünschten Längen (L1) zuschneidet; die Schneideinrichtung (10) nur die Metallseele oder Metall-Litze (6, 7, 8, 9) des Drahtes oder Kabels (1) sowie das Mindestmaß an Isoliermaterial (12) abschneidet, das die Seele des Kabels umhüllt, und diese auf eine solche Weise, daß der stetige Verlauf auf der Höhe des Isoliermaterials beibehalten wird; und die Vor-Abisoliereinrichtungen (13, 14) für das Ende oder die Enden der Metallseelen oder Metall-Litzen (6, 7, 8, 9) des abgeschnittenen Kabelstücks nach und/oder vor der genannten Schneideinrichtung (10) angeordnet und benutzt sind.

## Claims

1. Procedure for preparing the cutting into pieces and for pre-trimming of conducting wires or cables, of the type using cutting means and pre-stripping means, characterized in
that it uses cutting means (10) cutting the pieces of cable into desired lengths (L1); the cutting means only cut the metal cores or strands (6, 7, 8, 9) of the wire or cable (1) and the minimum of the insulator (12) wrapping the cable and in such a way that the continuity at the level of the insulator is maintained; and the pre-stripping means (13, 14) of the end or ends of the metal cores or strands (6, 7, 8, 9) of the cut piece of cable are placed and used downstream and/or upstream of said cutting means (10) and are formed by two cutting blades placed at both sides downstream and/or upstream of the cutting means (10) for the cores, the blades (13, 14) being perpendicular to the longitudinal axis of the cable (1) and the half-cylindrical cutting indentations (20, 21, 22, 23) which correspond to the cores or strands (6, 7, 8, 9) of the conductors (2, 3, 4, 5).

2. Procedure as claimed in claim 1, characterized in that the cutting means (10) are a knife, the pointed double-bladed teeth (15, 16, 17, 18) thereof having a blade perpendicular to the longitudinal axis of the cable.

3. Procedure as claimed in claim 1, characterized in that the cutting means (10) are a laser-type cutting apparatus.

4. Procedure as claimed in claim 2, characterized in that the width of the blades of the teeth (15, 16, 17, 18) is slightly larger than the diameter of the metal core or strand (6, 7, 8, 9) of the conducting cables or wires.

5. Procedure as claimed in claim 1, characterized in that the two cutting blades have one single slope, and that said slope is directed downwardly to the cutting means (10) which is placed between two blades.

6. Procedure as claimed in claim 1, characterized in that in the case of a ribbon-cable the cutting means (10) only cut the metal core or strand (6, 7, 8, 9) of the cable (1) and the minimum of the insulator (12) wrapping said core, in such a way that the rest of the parts is left continuous, said rest forming the insulator and particularly the insulating part which connects the different conductors (2, 3, 4, 5) between each other and forms said ribbon.

7. Procedure as claimed in claim 6, characterized in that the distance of axes between the cutting means (10) or the blades of the cutting means corresponds with the distance of the axes of the cores or strands (6, 7, 8, 9) of the conductors (2, 3, 4, 5) of the ribbon-cable (1).

8. Procedure as claimed in claim 6, characterized in that the pre-stripping means (13, 14) are two cutting blades (13, 14) disposed perpendicularly to the longitudinal axis of the cable (1), the distance thereof determining the length of the waste pieces, said blades (13, 14) comprising half-cylindrical cuting indentations (20, 21, 22, 23) corresponding to the cores or strands (6, 7, 8, 9) of the conductors (2, 3, 4, 5), the remaining portions (28) of the cutting blades being horizontal for cutting the insulator (12) which forms the ribbon and connects the different conductors (2, 3, 4, 5) of the cable with each other.

9. Apparatus for realizing the procedure as claimed in any one of the claims 1, 2, 3, 4, 5, 6, 7 or 8, characterized in that it comprises cutting means (10) cutting the pieces of cable into the desired lengths (L1); the cutting means (10) only cuting the metal core or strand (6, 7, 8, 9) of the wire or cable (1) and the minimum of the insulator (12) wrapping the core of the cable, in such a way that the continuity at the level of the insulator is maintained; and the pre-stripping means (13, 14) of the end or ends of the metal cores or strands (6, 7, 8, 9) of the cut piece of cable are placed and used downstream and/or upstream of said cutting means (10).
